# FASCICULE DE BREVET EUROPEEN

(11) **EP 2 677 634 B1**
(45) Date de publication et mention de la délivrance du brevet: **30.11.2022**
(21) Numéro de dépôt: 13171189.7
(22) Date de dépôt: 10.06.2013
(51) Int. Cl.: H02K 3/50, H02K 3/52

(54) **Interconnecteur pour un stator d'une machine électrique et stator comprenant un tel interconnecteur**
Zwischenverbinder für einen Stator einer elektrischen Maschine und Stator mit einem derartigen Zwischenverbinder
Interconnector for a stator of an electric machine and stator comprising such an interconnector

(30) Priorité: 20.06.2012 FR 1255770
(43) Date de publication de la demande: 25.12.2013
(73) Titulaire: VALEO EQUIPEMENTS ELECTRIQUES MOTEUR, 94046 Créteil (FR)
(72) Inventeur: Jugovic, Svetislav, 91260 Juvisy-sur-Orge (FR); El Baraka, Khadija, 77700 Serris (FR)
(74) Mandataire: Valeo Powertrain Systems

(56) Documents cités:
- WO-A1-2011/119574
- WO-A2-2011/151692
- JP-B2- 4 931 742
- US-A1- 2008 150 377
- US-A1- 2010 148 615

## Description

### DOMAINE TECHNIQUE DE L'INVENTION

L'invention concerne un interconnecteur pour stator de machine électrique ainsi que le stator de la machine électrique associé.

L'invention se rapporte au domaine des machines électriques telles que les moteurs, les alternateurs, ou les alterno-démarreurs.

L'invention trouve une application particulièrement avantageuse avec les alternateurs utilisés dans des systèmes dits "range-extender" destinés à augmenter l'autonomie des véhicules électriques. Ces systèmes comportent à cet effet un moteur thermique de faible puissance entraînant mécaniquement en rotation l'alternateur destiné à fournir, quand cela est nécessaire, de l'énergie électrique à des batteries d'alimentation d'un moteur électrique de traction du véhicule.

### ETAT DE LA TECHNIQUE

On connaît des machines électriques comportant un stator et un rotor solidaire d'un arbre. Le rotor pourra être solidaire d'un arbre menant et/ou menée et pourra appartenir à une machine électrique tournante sous la forme d'un alternateur comme décrit dans le document EP 0 803 962 ou d'un moteur électrique comme décrit dans le document EP 0 831 580.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0 80 3962.

Comme décrit dans le document FR2 890 798 auquel on se reportera pour plus de précisions, la machine comporte un rotor à griffes et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. Dans ce document la machine électrique est polyphasée et comporte un bobinage de stator comportant plusieurs bobines préformées. Plus précisément on monte sur les dents du corps du stator les bobines préformées réalisées à partir d'un fil enroulé sur plusieurs tours. Les fils consistent par exemple en un fil de cuivre revêtu d'émail.

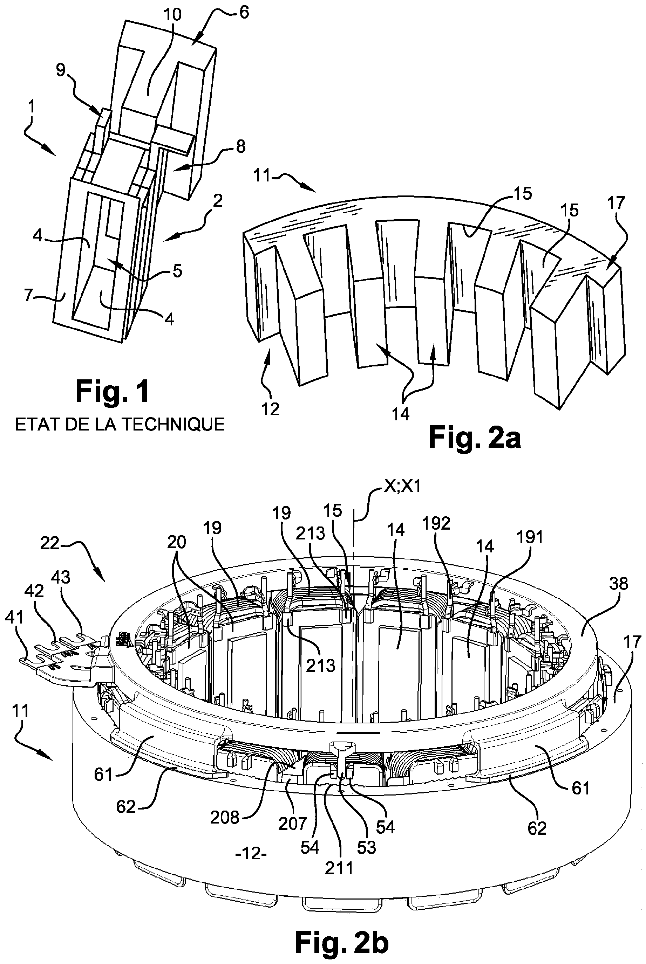

Comme cela est visible sur la figure 1, chaque bobine est montée autour d'un isolant d'encoche 1 électriquement isolant ayant un corps 2 comportant des parois 4 délimitant un cadre 5 de forme globalement rectangulaire. Le corps 2 de l'isolant comporte en outre un rebord avant 7 et un rebord arrière 8 définissant avec les parois 4 du cadre 5 une gorge de montage d'une bobine 9. Le rebord arrière 8 est destiné à être positionné à proximité de la culasse 6 tandis que le rebord avant 7 est situé du côté intérieur de la machine. L'ensemble est destiné à être enfilé autour de la dent 10.

Dans une forme de réalisation, deux bobines sont implantées dans une même encoche, chaque bobine étant enroulée autour de l'une des dents délimitant l'encoche par l'intermédiaire d'un isolant de bobine.

Les bobines sont interconnectées entre elles, par exemple par soudure ou à l'aide d'un interconnecter pour former une phase de la machine qui pourra être du type polyphasée. Le document US2005/0253466 décrit ainsi un interconnecteur de forme annulaire comportant des pistes conductrices ménagées dans sa paroi radiale suivant un ou plusieurs niveaux radiaux pour l'interconnexion avec les bobines. Cet interconnecteur porte des terminaux de connexion. Toutefois, un tel connecteur est relativement encombrant et complexe à réaliser.

Le document US2008/150377 divulgue un carter de moteur isolant comprenant des premier à quatrième éléments d'alimentation électrique empilés dans leur direction de l'épaisseur pour être espacés et isolés les uns des autres et intégrés à un corps de boîtier par moulage par insertion. Un connecteur de source d'alimentation à l'aide des bornes de source de puissance de la deuxième à quatrième éléments d'alimentation en courant que les bornes du connecteur sont également intégré au corps de boîtier. Le document JP4931742 décrit un interconnecteur sans pion d'indexage pour le montage de l'interconnecteur par rapport aux bobines. Le document US2010148615 décrit un interconnecteur avec un pion d'indexage qui vient se loger dans un trou du corps du stator.

### OBJET DE L'INVENTION

L'invention vise à faciliter la fabrication d'un tel interconnecteur.

A cette fin, l'invention concerne un interconnecteur pour stator de machine électrique polyphasée comprenant un bobinage doté de plusieurs bobines et d'un neutre, comportant
- au moins quatre cadres de forme annulaire, ces cadres étant empilés axialement les uns sur les autres et isolés entre eux, chaque cadre portant sur sa périphérie interne des pattes s'étendant en saillie vers l'intérieur du cadre pour le soudage d'extrémités de bobines du stator,
- un des cadres, dit cadre de neutre, étant destiné à être relié au neutre du bobinage de la machine électrique, les trois autres cadres, dit cadres de phase, étant destinés à être reliés chacun à une phase de la machine électrique,
ledit interconnecteur étant caractérisé en ce qu'il comporte des pions d'indexage pour ajuster lors du montage un positionnement de l'interconnecteur par rapport au stator, les pions d'indexage étant destinés à coopérer avec des systèmes de guidage portés par des isolants de bobine.

Selon une réalisation, les cadres sont noyés dans un corps réalisé en matériau électriquement isolant, tel que de la matière plastique.

Selon une réalisation, un ensemble formé par une patte d'un cadre de phase et une patte du cadre de neutre est configuré de manière à être positionné entre les côtés d'une bobine du stator.

Selon une réalisation, le cadre de neutre étant situé à une extrémité de l'empilement des cadres, les pattes du cadre de neutre sont dirigées, suivant une direction axiale, dans un sens inverse par rapport aux pattes des cadres de phase.

Selon une réalisation, chaque patte comporte:
- une portion en forme de L ayant un premier bras issu de la périphérie interne d'un cadre qui s'étend vers l'intérieur du cadre et un deuxième bras perpendiculaire au premier bras, et
- une tête reliée à un des bords du deuxième bras.

Selon une réalisation, la tête présente une forme bombée creuse.

Selon une réalisation, chaque cadre de phase comporte à sa périphérie externe un terminal de connexion pour la connexion avec un connecteur de puissance.

Selon une réalisation, les terminaux de connexion sont placés côte à côte et présentent une extrémité en forme de U.

Selon une réalisation, l'interconnecteur comporte sur une périphérie externe des pieds d'appui destinés à reposer sur un rebord d'une culasse du stator.

Selon une réalisation, les pieds d'appui assurent un positionnement du corps de l'interconnecteur au-dessus de bobines du stator sans les toucher.

Selon une réalisation, les pieds d'appui présentent une forme en L avec une extrémité fixée à la périphérie externe du corps et une extrémité terminée par un support destiné à venir en appui sur le rebord de la culasse.

L'invention concerne en outre un stator comportant un bobinage formé par des bobines ayant des extrémités reliées à un interconnecteur selon l'invention.

De préférence, l'interconnecteur présente un diamètre externe inférieur au diamètre externe du stator.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre un isolant de bobine selon l'état de la technique destiné à être monté autour d'une dent d'un stator;
Les figures 2a et 2b montrent respectivement des vues en perspective d'un stator seul et d'un stator bobiné muni d'un interconnecteur selon l'invention ;
La figure 2c montre une vue détaillée des connexions entre une bobine du stator et l'interconnecteur selon l'invention;
Les figures 3a à 3c montrent respectivement des vues en perspective de dessus et de dessous de l'interconnecteur selon l'invention;
La figure 4 représente, suivant une vue en perspective, un cadre de phase de l'interconnecteur selon l'invention;
La figure 5 montre une vue en perspective d'un empilement des cadres formant l'interconnecteur selon l'invention;
La figure 6 montre une vue en coupe transversale de l'empilement des cadres de l'interconnecteur selon l'invention;
La figure 7 représente, suivant une vue en perspective détaillée, une patte de connexion de l'interconnecteur selon l'invention;
La figure 8 montre, suivant une vue en perspective, le détail de la liaison entre un pion d'indexage de l'interconnecteur selon l'invention avec un système de guidage d'isolant de bobine;
La figure 9 montre, suivant une vue en perspective, un isolant de bobine destiné à être monté sur les dents du stator selon l'invention.

Les éléments identiques, similaires ou analogues conservent la même référence d'une figure à l'autre.

### DESCRIPTION D'EXEMPLES DE REALISATION DE L'INVENTION

Les figures 2a et 2b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles.

Le stator appartient à une machine électrique tournante polyphasée comportant un bobinage de stator doté de plusieurs bobines 19, ici préformées, et d'un point neutre, dit neutre de la machine, visible par exemple à la figure 1 du document EP 0 831 580. Les bobines 19 sont interconnectées entre elles à l'aide d'un interconnecteur 22 compact comportant plusieurs cadres 31-34 dont l'un 31, dit cadre de neutre 31 est relié au neutre de la machine électrique tournante.

Plus précisément comme cela est visible sur la figure 2b, on monte sur les dents 14 du stator les bobines 19 préformées formant le bobinage du stator 11. Ces bobines 19 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat.

Dans une forme de réalisation, deux bobines 19 sont implantées dans une même encoche 15, chaque bobine 19 étant enroulée autour de l'une des dents 14 métallique délimitant l'encoche par l'intermédiaire d'un isolant de bobine 20 Cet isolant 20 est un isolant électrique réalisé dans ce mode de réalisation en matière électriquement isolante et moulable. Les extrémités 191, 192 de chaque bobine 19 dépassent axialement du bobinage d'un même côté du stator 11 correspondant sur la figure 2b au côté supérieur du stator 11. De préférence, les extrémités 191, 192 des bobines 19 sont situées sensiblement suivant une même circonférence du côté de l'extrémité libre des dents 14, c'est-à-dire du côté éloigné de la culasse 17 et du côté le plus proche de l'entrefer entre la périphérie interne du stator et la périphérie externe du rotor que comporte la machin électrique. Chaque bobine 19 comporte une première extrémité 191 appelée "entrée" destinée à être connectée avec les autres entrées de manière alternée pour appartenir à une des phases U, V, W de la machine et une deuxième extrémité 192 appelée "sortie" destinée à être reliée au neutre de la machine électrique. A cet effet, les bobines 19 sont interconnectées entre elles pour former les différentes phases U, V, W à l'aide de l' interconnecteur 22 d'axe X1 confondu avec l'axe X lorsque l'interconnecteur 22 est installé sur le stator 11.

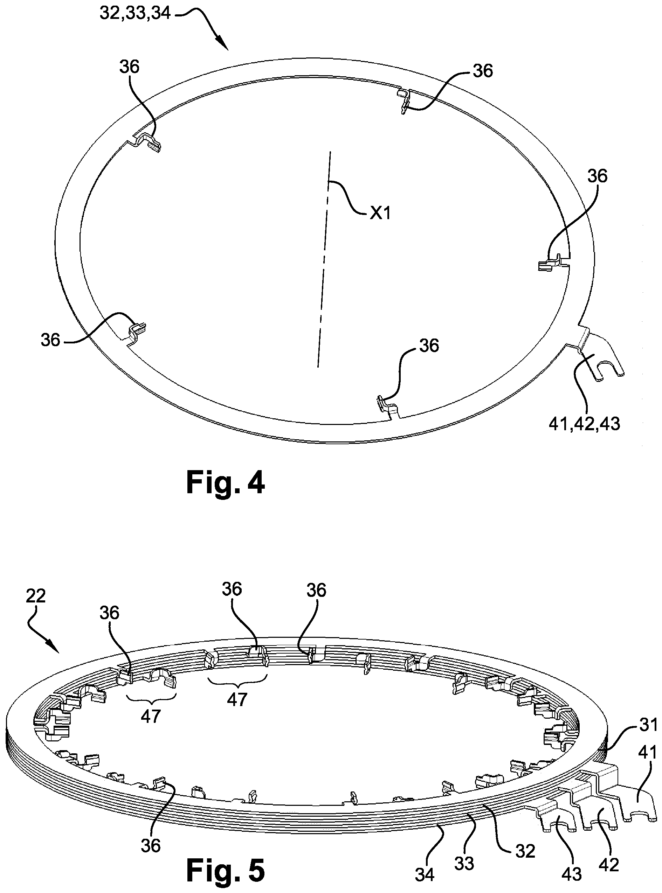

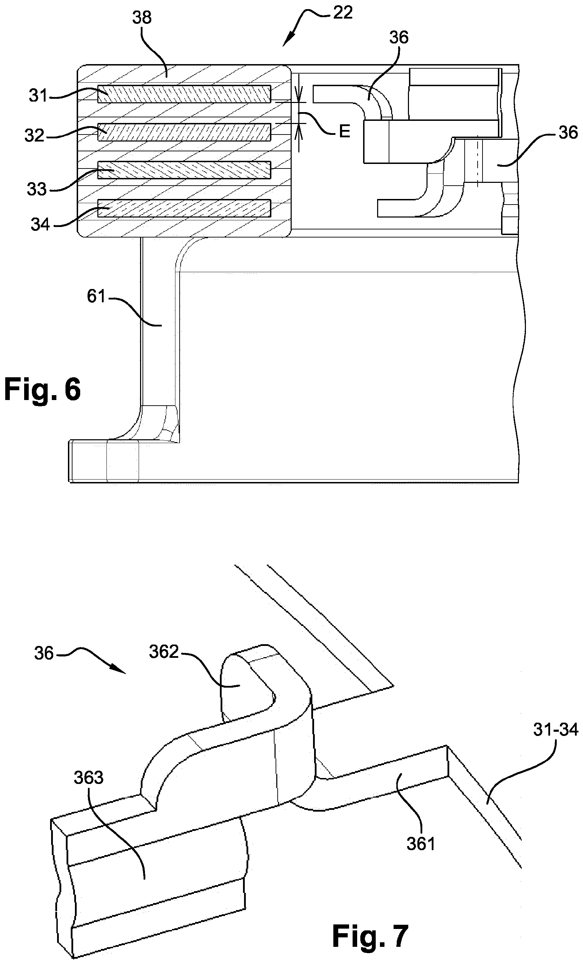

Plus précisément, comme cela est visible sur les figures 5 et 6, l'interconnecteur 22 comporte quatre cadres 31-34 de forme annulaire s'étendant suivant un plan radial. Les cadres 31-34 sont électriquement conducteurs en étant par exemple en cuivre ou avantageusement en un autre matériau métallique soudable Ces cadres 31-34 ont des diamètres internes et externes sensiblement identiques. Le diamètre externe des cadres 31-34, correspondant sensiblement au diamètre externe de l'interconnecteur 22, est inférieur au diamètre externe du stator 11, constitué par le diamètre externe de la culasse 17, pour faciliter une opération d'imprégnation des bobines 19 et réduction de l'encombrement diamétral. Ces cadres 31-34 sont empilés axialement les uns sur les autres et isolés électriquement entre eux. Chaque cadre 31-34 porte sur sa périphérie interne des pattes 36 apparentes s'étendant en saillie radiale vers l'intérieur du cadre pour le soudage des extrémités 191, 192 des bobines du stator. De préférence, les cadres 31-34 sont noyés dans un corps 38 réalisé en matériau électriquement isolant, tel que de la matière plastique. Une couche de matière électriquement isolante 38 est présente entre chaque cadre comme visible par exemple à la figure 6.

Un des cadres 31, dit cadre neutre, est destiné à être relié au neutre du bobinage de la machine électrique comprenant les bobines 19 agencés ici selon un montage en étoile avec un point neutre constitué à la faveur du cadre 31. Ce cadre de neutre 31 est situé à une extrémité de l'empilement des cadres 31-34, ici à l'extrémité la plus éloignée de la culasse 17. Etant donné que chaque bobine 19 a une extrémité de sortie 192 reliée au neutre, le cadre 31 de neutre comporte un nombre de pattes 36 égal au nombre de bobines 19, en l'occurrence égal à 15.

Les trois autre cadres 32-34, dit cadres de phase, sont destinés à être reliés chacun aux entrées 191 des bobines 19 de la phase U, V, W concernée la machine électrique, ici de type triphasée. Les extrémités d'entrée 191 des bobines 19 sont ainsi alternativement reliées circonférentiellement aux sorties de phase du bobinage de la machine électrique par l'intermédiaire d'un des cadres 32-34 de phase de l'interconnecteur 22. Les cadres de phase comporte chacun un nombre de pattes égal au nombre de bobines divisé par le nombre de phases de la machine, soit ici 15/3=5 (cf. figure 4). Plus précisément chaque phase comporte cinq bobines 19 reliées électriquement entre elles par l'un des cadres 32-34, dont le nombre de pattes 36 est égal à cinq.

A cet effet, comme montré sur les figures 2b, 3a, 3b et 3c, 4 et 5, chaque cadre 32-34 de phase comporte sur sa périphérie externe un terminal 41-43 de connexion pour l'interconnexion avec un connecteur de puissance (non représenté) lui-même relié à un onduleur décrit par exemple dans le document EP 0 831 580. Ces terminaux 41-43 de connexion placés côte à côte présentent une extrémité en forme de U et constituent les sorties des phases du bobinage à bobines 19 de la machine. On appréciera que les terminaux 41-43 sont simplifiés par rapport aux terminaux décrits dans le document US 2005/0253466 du fait qu'ils font partie des cadres 32-34. Ces terminaux 41-43 sont rigides et d'un encombrement réduit.

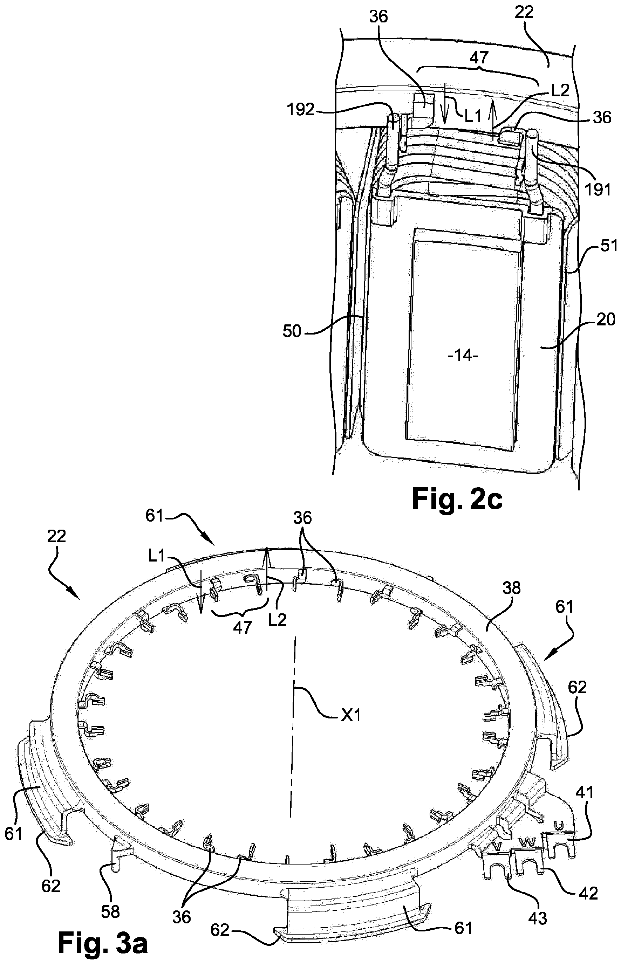

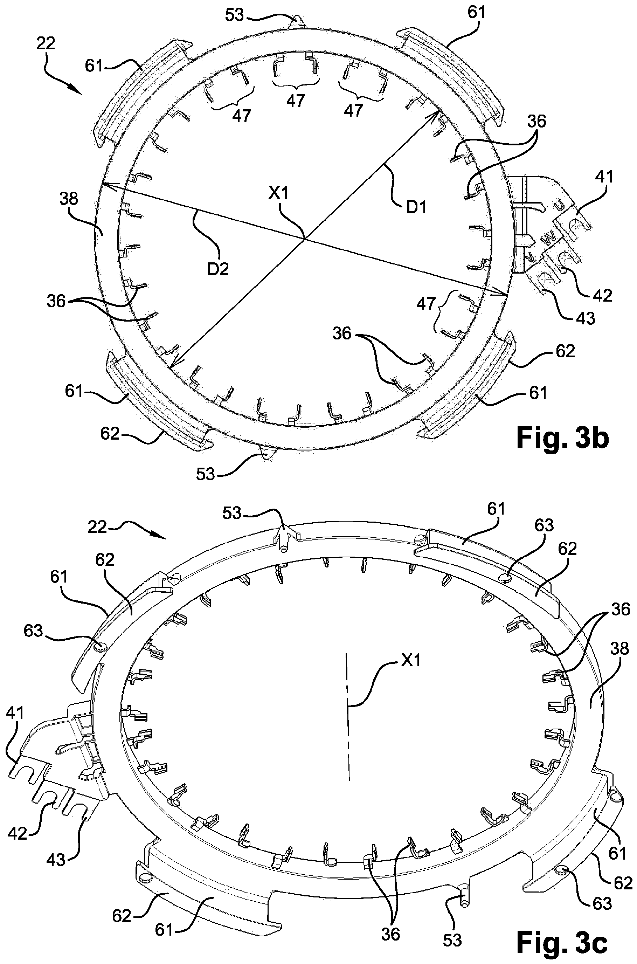

Les pattes 36 des différents cadres 31-34 sont décalées angulairement les unes par rapport aux autres. En outre, pour avoir suffisamment de place pour pincer une patte 36 et une extrémité 191, 192 d'une bobine 19 à l'aide d'une électrode de soudage, un ensemble 47, formé par une patte 36 d'un des cadres de phase 32-34 et une patte 36 du cadre de neutre 31 destinées à être soudées sur les extrémités 191, 192 d'une même bobine 19, est configuré de manière à être positionné entre les côtés 50, 51 de ladite bobine 19 s'étendant entre les extrémités axiales de la bobine 19 (cf. figures 2c et 3b). Plus précisément les pattes 36 de l'ensemble 47 sont en contact avec les zones en vis-à-vis des extrémités 191, 192 comme mieux visible à la figure 2c. On notera que les extrémités 191, 192 sont décalées l'une vers l'autre.

Par ailleurs, comme cela est visible sur les figures 2c et 3a, le cadre de neutre 31 étant situé à une extrémité de l'empilement des cadres 31-34, les pattes 36 du cadre de neutre 31 sont dirigées, suivant une direction axiale, dans un sens inverse par rapport aux pattes 36 des cadres de phase 32-34, de sorte que toutes les pattes 36 de l'interconnecteur 22 se situe à la même hauteur que les extrémités 191, 192 de bobine. En effet, les pattes 36 du cadre de neutre 31 sont dirigées suivant la direction axiale référencée L1; tandis que les pattes 36 des cadres de phase sont dirigées suivant la direction axiale opposée référencée L2. Une telle configuration qui limite la distance entre les pattes 36 de l'interconnecteur 22 et les extrémités des bobines 19 permet de réduire la longueur des fils du bobinage.

Dans un mode de réalisation présenté sur la figure 7, chaque patte 36 comporte une portion en forme de L ayant un premier bras 361 issu de la périphérie interne d'un cadre 31-34 qui s'étend vers l'intérieur du cadre 31-34 et un deuxième bras 362 perpendiculaire au premier bras 361. La patte 36 comporte également une tête 363 sur laquelle est soudée l'extrémité 191, 192 d'une bobine 19. Cette tête 363 reliée à un des bords du deuxième bras 362 présente une forme bombée creuse. La portion en L des pattes 36 du cadre de neutre 31 est pliée dans un sens inverse par rapport aux portions en L des pattes 36 des cadres de phase 32-34. De préférence, dans un ensemble 47 de deux pattes 36 destinées à être reliée à une entrée 191 et une sortie 192 d'une même bobine 19, les parties creuses des têtes 363 de ces deux pattes 36 sont tournées l'une vers l'autre.

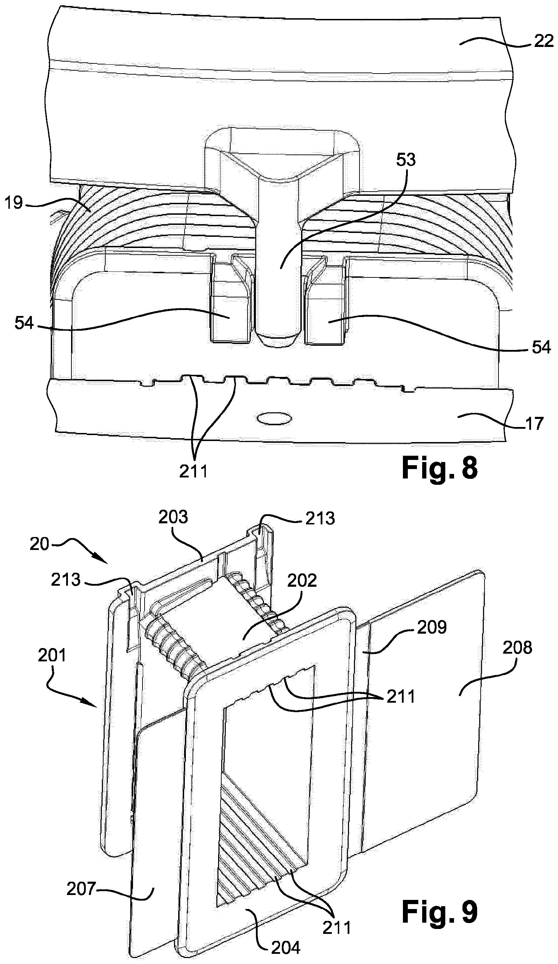

Par ailleurs, comme montré sur les figures 2b, 3a, 3b, 3c et 8, l'interconnecteur 22 comporte des pions 53 permettant, lors du montage, l'indexage de l'interconnecteur 22 par rapport aux bobines 19 afin de réduire les risques de mauvaises connexions entre les bobines. Ces pions d'indexage 53 d'extension axiale sont portés par une périphérie externe de l'interconnecteur 22. Suivant une réalisation, ces pions 53 comportent une base venant de matière avec la périphérie externe de l'interconnecteur 22 portant une tige 58 de forme sensiblement cylindre ayant une extrémité libre biseautée. Ces pions d'indexage 53 sont destinés à coopérer avec des systèmes de guidage portés par les isolants de bobine 20. Comme cela est visible sur les figures 2b et 8, ces systèmes de guidage sont formés par des protubérances 54 définissant un passage pour un pion d'indexage 53. Pour faciliter l'insertion des pions 53 d'indexage entre les protubérances 54, les protubérances 54 sont conformées d'une manière telle que le passage présente une forme légèrement évasée à son extrémité débouchant du côté des extrémités 191, 192 du fil de la bobine 19. En l'occurrence, l'interconnecteur 22 comporte deux pions d'indexage 53.

Comme cela est visible sur les figures 2b, 3a, 3b, et 3c, l'interconnecteur 22 comporte également des pieds d'appui 61 destinés à reposer sur un rebord de la culasse 17 du stator 11. Ces pieds d'appui 61 présentent une forme en L avec une extrémité fixée à la périphérie externe du corps 38 et une extrémité terminée par un support 62 en appui sur le rebord de la culasse 17. Le support 62 comporte des creux 63 visibles sur la figure 3c destinés à recevoir des extrémités des tirants de fixation du stator.

Les pieds d'appui 61 sont ici au nombre de quatre répartis de manière régulière autour du corps 38. Deux pieds d'appui 61 successifs sont ainsi écartés angulairement d'un angle de 90 degrés. Les pieds d'appui 61 permettent de maintenir le corps 38 du connecteur 22 au-dessus des bobines 19 sans que le corps 38 soit en contact avec les bobines 19. En outre, l'encombrement circonférentiel des pieds 19 est suffisamment faible pour éviter que l'interconnecteur 22 recouvre entièrement la périphérie externe des bobines 19, ce qui facilite le refroidissement du stator 11 du fait de la grande zone de dégagement entre deux pieds d'appui 61 successifs et de l'espace entre le corps 38 de l'interconnecteur 22 et les bobines 19.

Les formes des pions d'indexage 53 et des pieds d'appui 61 pourront être obtenues par moulage.

Dans un exemple non limitatif de réalisation, l'interconnecteur 22 comporte des cadres 31-34 réalisés en cuivre ayant des diamètres internes D1 de l'ordre de 198,5 mm et des diamètres externes D2 de l'ordre de 218,5 mm (cf. figure 3b). Ces cadres 31-34 sont séparés entre eux par une épaisseur E de matériau isolant de l'ordre de 1,6mm (cf. figure 6).

Par ailleurs, l'isolant 20 de bobine est réalisé en matière électriquement isolante par exemple en matière plastique telle que du PA 6.6, qui pourra être renforcé par des fibres, telles que des fibres de verre. Comme montré sur la figure 9, l'isolant de bobine 20 comporte un corps 201 formé par un cadre 202 ainsi qu'un rebord avant 203 et un rebord arrière 204 définissant avec les parois du cadre 202 une gorge de montage de la bobine 19, comme visible sur la figure 2b. Le rebord arrière 204, destiné à être positionné du côté de la culasse 17, est prolongé d'un côté par un talon 207; et de l'autre par une ailette 208 via une zone de pliage 209. Le talon 207 est moins épais et moins large que l'ailette 302. Le talon 207 permet de diminuer les chutes de tension entre la culasse 17 et la bobine 19 concernée.

L'isolant 20 de bobine comporte en outre des rainures 211 borgnes ménagées dans les faces internes des parois supérieure et inférieure du cadre 24. Le coté non débouchant des rainures 211 borgnes est situé du côté intérieur de la machine afin d'éviter que le vernis d'imprégnation ne coule à l'intérieur de la machine et ce au niveau de l'entrefer délimité par les extrémités libre des dents 14 et la périphérie externe du rotor de la machine.

De préférence, comme cela est représenté sur les figures 2b et 9, les bordures longitudinales du rebord avant 203 sont configurées à une de leurs extrémités 213 pour servir de guide fil pour chaque extrémité 191, 192 de la bobine 19. A cet effet, les bordures longitudinales du rebord 203 présentent à une extrémité la forme d'une cuvette recevant une extrémité du fil. Le fil de la bobine 19 pourra être maintenu en position pour le soudage du connecteur 22 en prenant appui sur les faces latérales de la cuvette.

On décrit ci-après une opération permettant d'obtenir le stator bobiné selon l'invention connecté à l'interconnecteur 22.

Dans un premier temps, les isolants 20 de bobine sont positionnés autour d'un outil externe. Le fil est ensuite enroulé autour de l'isolant 20 de bobine à l'intérieur de la gorge. Chaque isolant 20 de bobine est ensuite retiré de l'outil puis enfilé autour d'une dent 14 du stator 11. Comme montré sur la figure 2b, le talon 207 de chaque dent 14 est alors positionné de manière à être plaqué contre le fond d'une encoche 15 pour isoler efficacement les bobines 19 de la culasse 17. L'ailette 208 est rabattue vers la bobine 19 de manière à être maintenue repliée par un rebord avant d'un isolant 20 adjacent. L'ailette 208 constitue ainsi un mur électriquement isolant entre deux bobines 19 adjacentes.

L'interconnecteur 22 externe est ensuite positionné au-dessus des bobines 19 pour assurer une connexion des bobines 19 aux différents cadres 31-34 des phases U, V, W de la machine. L'interconnecteur 22 est positionné de sorte que les pieds 61 reposent sur un rebord de la culasse 17 via le support 62 et que les pions 53 d'indexage s'insèrent entre les protubérances 54 correspondantes des isolants 20 de bobine.

L'interconnecteur 22 est ensuite fixé sur le stator 11 par soudage des pattes 36 du cadre de neutre 31 et des cadres de phase 32-34 avec les extrémités 191, 192 des bobines. A cet effet, les entrées 191 des bobines 19 sont soudées alternativement aux pattes 36 des cadres de phase 32-34 correspondant aux phases U, V et W; tandis que les sorties 192 des bobines 19 sont soudées aux pattes 36 appartenant au cadre de neutre 31.

On effectue ensuite une opération d'imprégnation du bobinage du stator 11 par un vernis d'imprégnation. A cette fin, le stator 11 est chauffé ainsi que le vernis pour être introduit à l'état liquide goutte à goutte dans les rainures borgne 211. Le vernis est par exemple à base de résine époxy, de résine polyester non saturée ou de résine silicone. Bien entendu, de manière connue, on peut ajouter aux résines des accélérateurs pour diminuer la durée de l'imprégnation. On notera que les rainures borgnes 211 des parois inférieure et supérieure sont éloignées les unes des autres en fonction de l'épaisseur de la culasse 17. Ces rainures 43, non référencées à la figure 2b, ne sont pas masquées par la culasse 17.

Alternativement, l'opération d'imprégnation pourra être effectuée par passage successif, suivant un déplacement en rotation du stator 11, des bobines 19 à l'intérieur d'un bain contenant du vernis chaud. Ainsi en variante l'opération d'imprégnation pourra être réalisée par trempage partiel et roulage du stator dans un bain de vernis d'imprégnation. En variante l'opération d'imprégnation pourra être réalisée sous vide ou par trempage simple complet du stator dans un bain de vernis d'imprégnation. Dans tous les cas le vernis est refroidi en se polymérisant.

On note que le positionnement de l'interconnecteur 22 au-dessus des bobines 19 ainsi que ses dimensions réduites, en particulier celle du diamètre extérieur qui est inférieur à celui du stator 11, facilite le passage du vernis d'imprégnation de l'extérieur vers l'intérieur des bobines 19 via les rainures 211 borgnes.

En variante, on réalise l'opération d'imprégnation avant de souder l'interconnecteur 22 aux extrémités 191, 192 des bobines 19 du stator 11.

De préférence, l'ensemble formé par le stator 11 et l'interconnecteur 22 est ensuite monté à l'intérieur d'un carter par frettage, ce carter pouvant par exemple être refroidi par eau.

Ainsi qu'il ressort de la description et des dessins que les ailettes 208, qui constituent un mur électriquement isolant entre deux bobines 19 consécutives, sont issues de l'isolant 20, ici en matière plastique moulable, en sorte que la fabrication de l'isolant 20, avantageusement équipé d'un talon 207, est aisée. Le montage de l'isolant 20 sur sa dent associée 14 et le soudage des extrémités 191, 192 est également aisé grâce à la configuration de l'isolant 20 avantageusement configuré pour guider les extrémités 191, 192 de la bobine 19. Le vernis d'imprégnation permet une bonne fixation de la bobine sur sa dent 14 associée grâce aux rainures 211, qui sont borgnes pour éviter de polluer l'entrefer entre le stator et le rotor de la machine électrique. La culasse 17 est dans cet exemple de réalisation de forme annulaire et constitue un support pour les dents 14 s'étendant vers l'intérieur en direction de l'axe X. Les dents 14 sont réparties circonférentiellement de manière régulière et de manière connue un entrefer existe entre les extrémités libres des dents 14 et la périphérie externe du rotor de la machine électrique tournante. Cet entrefer ne sera pas polluer par le vernis d'imprégnation. Les talons 207 permettent d'augmenter la puissance de la machine électrique. Les ailettes 208 permettent d'augmenter également la puissance de la machine électrique tout en rendant celle-ci plus fiable et compacte.

Le rotor de la machine électrique pourra être un rotor à griffes comme dans le document FR 2 890 798. En variante le rotor pourra être à pôles saillants. En variante le rotor pourra être un rotor à aimants permanents comme dans les documents EP 0 803 962 et EP 0 831 580 précités. En variante le rotor à griffes ou à pôles saillants pourra comporter également des aimants permanents. En variante les dents 14 pourront ne pas être réparties circonférentiellement de manière régulière.

L'homme du métier pourra bien entendu modifier la configuration de l'interconnecteur 22 précédemment décrit sans sortir du cadre de l'invention. Ainsi notamment, le stator 11 pourra présenter en variante un bobinage quadriphasé, pentaphasé, voire même hexaphasé. Dans ce cas, l'interconnecteur 22 comporte respectivement 5, 6, 7 cadres empilés les uns sur les autres, le cadre externe constituant le point neutre.

Dans le mode de réalisation de la figure 9, l'ailette 208 est destinée à être pliée et laissée libre. Dans ce cas, lorsque les isolants 20 de bobine sont montés sur les dents 14, l'ailette 208 d'un isolant 20 donné prend appui contre un rebord avant 203 d'un isolant de bobine 20 adjacent.

Il ressort de la description et des dessins que chaque rebord 203, 204 présente deux bordures longitudinales et deux bordures transversales reliant entre elles les bordures longitudinales de plus grande longueur. Le talon 207 et l'ailette 208 sont issues des bordures longitudinales du rebord arrière (Voir figure 9). Ainsi dans d'autres modes de réalisation l'ailette 208 pourra être fixée au moyen d'un système d'encliquetage avec la bordure longitudinale du rebord avant 203 située du côté de l'ailette 208. Le système d'encliquetage pourra être formé par des pattes portées par la bordure longitudinale du rebord avant 203. Ces pattes sont destinées à coopérer par encliquetage avec des fenêtres ménagées dans la paroi de l'ailette 208 et pourront présenter chacune la forme d'un crochet ayant un côté en forme de rampe triangulaire terminée par un rebord permettant de retenir l'ailette 208 après que la patte a traversé une fenêtre. La zone de pliage, le bord de l'ailette 208, situé du côté des fenêtres, est également aminci afin de permettre un plaquage optimal de l'ailette 208 contre le côté de la bobine.

Alternativement le système d'encliquetage pourra être formé par une encoche ménagée dans l'épaisseur du rebord avant 203. Le bord libre de l'ailette 208 forme alors une languette destinée à s'insérer à l'intérieur de l'encoche pour maintenir l'ailette 208 rabattue contre le corps 23 de l'isolant 20. A cet effet, la partie de l'ailette 208 formant la languette pourra présenter une épaisseur amincie afin de faciliter le positionnement de la languette à l'intérieure de l'encoche et de garantir un bon plaquage de l'ailette208 contre un côté latéral de la bobine 19.

La machine électrique tournante pourra appartenir à un véhicule automobile et être de manière précitée un alternateur, un alterno-démarreur qui est un alternateur réversible, un moteur électrique ou un ralentisseur électromagnétique.

Dans le cadre d'un alternateur appartenant à un prolongateur d'autonomie d'un véhicule électrique (Range-extender en Anglais) le rotor pourra être un rotor à aimants permanents avec plusieurs aimants par logement soumis à l'action d'un ressort comme décrit dans la demande FR 12/54733 déposée le 24/05/2012. On appréciera que ce type de machine est compact axialement tout en étant d'une grande puissance.

Bien entendu l'isolant 20, qui est ici rigide, pourra être en variante dépourvu d'ailette et/ou de talon. Le nombre de bobines 19 dépend des applications et peut donc être inférieur ou supérieur à 15.

## Revendications

1. Interconnecteur (22) pour stator (11) de machine électrique polyphasée comprenant un bobinage doté de plusieurs bobines (19) et d'un neutre comportant:
- au moins quatre cadres (31-34) de forme annulaire, ces cadres (31-34) étant empilés axialement les uns sur les autres et isolés entre eux, chaque cadre (31-34) portant sur sa périphérie interne des pattes (36) s'étendant en saillie vers l'intérieur du cadre (31-34) pour le soudage d'extrémités (191, 192) de bobines (19) du stator (11),
- un des cadres (31), dit cadre de neutre, étant destiné à être relié au neutre de la machine électrique, les trois autres cadres (32-34), dit cadres de phase, étant destinés à être reliés chacun à une phase de la machine électrique,
ledit interconnecteur étant **caractérisé en ce qu'**il comporte des pions d'indexage (53) pour ajuster lors du montage un positionnement de l'interconnecteur (22) par rapport au stator (11), les pions d'indexage (53) étant destinés à coopérer avec des systèmes de guidage portés par des isolants de bobine (20) .

2. Interconnecteur selon la revendication 1, **caractérisé en ce que** les cadres (31-34) sont noyés dans un corps (38) réalisé en matériau électriquement isolant, tel que de la matière plastique.

3. Interconnecteur selon la revendication 1 ou 2, **caractérisé en ce que** un ensemble formé par une patte (36) d'un cadre de phase (32-34) et une patte (36) du cadre de neutre (31) est configuré de manière à être positionné entre les côtés (50, 51) d'une bobine (19) du stator (11).

4. Interconnecteur selon l'une des revendications 1 à 3, **caractérisé en ce que** le cadre de neutre (31) étant situé à une extrémité de l'empilement des cadres (31-34), les pattes (36) du cadre de neutre (31) sont dirigées, suivant une direction axiale, dans un sens inverse par rapport aux pattes (36) des cadres de phase (32-34).

5. Interconnecteur selon l'une des revendications 1 à 4, **caractérisé en ce que** chaque patte (36) comporte:
- une portion en forme de L ayant un premier bras (361) issu de la périphérie interne d'un cadre (31-34) qui s'étend vers l'intérieur du cadre (31-34) et un deuxième bras (362) perpendiculaire au premier bras (361), et
- une tête (363) reliée à un des bords du deuxième bras (362).

6. Interconnecteur selon la revendication 5, **caractérisé en ce que** la tête (363) présente une forme bombée creuse.

7. Interconnecteur selon l'une des revendications 1 à 6, **caractérisé en ce que** chaque cadre de phase (32-34) comporte à sa périphérie externe un terminal de connexion (41-43) pour la connexion avec un connecteur de puissance.

8. Interconnecteur selon la revendication 7, **caractérisé en ce que** les terminaux (41-43) de connexion sont placés côte à côte et présentent une extrémité en forme de U.

9. Interconnecteur selon l'une des revendications 1 à 8, **caractérisé en ce qu'**il comporte sur une périphérie externe des pieds d'appui (61) destinés à reposer sur un rebord d'une culasse (17) du stator (11).

10. Stator (11) comportant un bobinage formé par des bobines (19) ayant des extrémités (191, 192) reliées à un interconnecteur (22) selon l'une des revendications précédentes.

11. Stator selon la revendication 10, **caractérisé en ce que** l'interconnecteur (22) présente un diamètre externe (D2) inférieur au diamètre externe du stator (11).

## Patentansprüche

1. Verbinder (22) für einen Stator (11) einer mehrphasigen elektrischen Maschine, welcher eine Wicklung mit mehreren Spulen (19) und einem Neutralleiter umfasst, aufweisend:
- wenigstens vier ringförmige Rahmen (31-34), wobei diese Rahmen (31-34) axial übereinander gestapelt und voneinander isoliert sind, wobei jeder Rahmen (31-34) an seinem Innenumfang Laschen (36) trägt, die sich zum Inneren des Rahmens (31-34) vorstehend erstrecken, zum Anschweißen von Enden (191, 192) der Spulen (19) des Stators (11),
- wobei einer der Rahmen (31), der Neutralrahmen, dazu bestimmt ist, mit dem Neutralleiter der elektrischen Maschine verbunden zu sein, wobei die drei anderen Rahmen (32-34), die Phasenrahmen, dazu bestimmt sind, jeweils mit einer Phase der elektrischen Maschine verbunden zu sein,
wobei der Verbinder **dadurch gekennzeichnet ist, dass** er Raststifte (53) zur Anpassung einer Positionierung des Verbinders (22) bezogen auf den Stator (11) bei der Montage aufweist, wobei die Raststifte (53) dazu bestimmt sind, mit Führungssystemen zusammenzuwirken, die von Spulenisolierungen (20) getragen werden.

2. Verbinder nach Anspruch 1, **dadurch gekennzeichnet, dass** die Rahmen (31-34) in einen Körper (38) eingebettet sind, der aus elektrisch isolierendem Material hergestellt sind, wie etwa Kunststoff.

3. Verbinder nach Anspruch 1 oder 2, **dadurch gekennzeichnet, dass** eine Anordnung, die von einer Lasche (36) eines Phasenrahmens (32-34) und einer Lasche (36) des Neutralrahmens (31) gebildet wird, so ausgebildet ist, dass sie zwischen den Seiten (50, 51) einer Spule (19) des Stators (11) positioniert ist.

4. Verbinder nach einem der Ansprüche 1 bis 3, **dadurch gekennzeichnet, dass**, der Neutralrahmen (31) sich an einem Ende des Stapels der Rahmen (31-34) befindend, die Laschen (36) des Neutralrahmens (31) in einer Axialrichtung entgegengesetzt zu den Laschen (36) der Phasenrahmen (32-34) gerichtet sind.

5. Verbinder nach einem der Ansprüche 1 bis 4, **dadurch gekennzeichnet, dass** jede Lasche (36) Folgendes aufweist:
- einen L-förmigen Abschnitt mit einem ersten Arm (361) aus dem Innenumfang eines Rahmens (31-34), der sich zum Inneren des Rahmens (31-34) erstreckt, und einen zweiten Arm (362) senkrecht zum ersten Arm (361), und
- einen Kopf (363), der mit einem der Ränder des zweiten Arms (362) verbunden ist.

6. Verbinder nach Anspruch 5, **dadurch gekennzeichnet, dass** der Kopf (363) eine hohle gewölbte Form aufweist.

7. Verbinder nach einem der Ansprüche 1 bis 6, **dadurch gekennzeichnet, dass** jeder Phasenrahmen (32-34) an seinem Außenumfang eine Verbindungsklemme (41-43) zur Verbindung mit einem Leistungsverbinder aufweist.

8. Verbinder nach Anspruch 7, **dadurch gekennzeichnet, dass** die Verbindungsklemmen (41-43) Seite an Seite platziert sind und ein U-förmiges Ende aufweisen.

9. Verbinder nach einem der Ansprüche 1 bis 8, **dadurch gekennzeichnet, dass** er an einem Außenumfang Stützfüße (61) aufweist, die dazu bestimmt sind, auf einem Rand eines Jochgestells (17) des Stators (11) aufzuliegen.

10. Stator (11), der eine Wicklung aufweist, die von Spulen (19) mit Enden (191, 192) gebildet ist, die mit einem Verbinder (22) nach einem der vorhergehenden Ansprüche verbunden sind.

11. Stator nach Anspruch 10, **dadurch gekennzeichnet, dass** der Verbinder (22) einen Außendurchmesser (D2) aufweist, der kleiner als der Außendurchmesser des Stators (11) ist.

## Claims

1. Interconnector (22) for a stator (11) of a polyphase electric machine comprising a winding provided with a plurality of coils (19) and a neutral, having:
- at least four frames (31-34) of annular shape, these frames (31-34) being stacked axially on top of one another and insulated from one another, each frame (31-34) bearing on its internal periphery tabs (36) that protrude towards the interior of the frame (31-34) for the welding of ends (191, 192) of coils (19) of the stator (11),
- one of the frames (31), referred to as the neutral frame, being intended to be connected to the neutral of the electric machine, the three other frames (32-34), referred to as the phase frames, being intended to each be connected to a phase of the electric machine,
said interconnector being **characterized in that** it has indexing pins (53) for adjusting, during assembly, a position of the interconnector (22) with respect to the stator (11), the indexing pins (53) being intended to cooperate with guide systems carried by coil insulators (20) .

2. Interconnector according to Claim 1, **characterized in that** the frames (31-34) are embedded in a body (38) made of electrically insulating material, such as plastics material.

3. Interconnector according to Claim 1 or 2, **characterized in that** an assembly formed by a tab (36) of a phase frame (32-34) and a tab (36) of the neutral frame (31) is configured to be positioned between the sides (50, 51) of a coil (19) of the stator (11).

4. Interconnector according to one of Claims 1 to 3, **characterized in that**, with the neutral frame (31) being situated at one end of the stack of frames (31-34), the tabs (36) of the neutral frame (31) are directed, along an axial direction, in an opposite direction to the tabs (36) of the phase frames (32-34).

5. Interconnector according to one of Claims 1 to 4, **characterized in that** each tab (36) has:
- an L-shaped portion having a first arm (361) extending from the internal periphery of a frame (31-34) which extends towards the interior of the frame (31-34) and a second arm (362) perpendicular to the first arm (361), and
- a head (363) connected to one of the edges of the second arm (362).

6. Interconnector according to Claim 5, **characterized in that** the head (363) has a hollow domed shape.

7. Interconnector according to one of Claims 1 to 6, **characterized in that** each phase frame (32-34) has, at its external periphery, a connection terminal (41-43) for connecting to a power connector.

8. Interconnector according to Claim 7, **characterized in that** the connection terminals (41-43) are placed side by side and have a U-shaped end.

9. Interconnector according to one of Claims 1 to 8, **characterized in that** it has, on its external periphery, support feet (61) intended to rest on a rim of a yoke (17) of the stator (11) .

10. Stator (11) having a winding formed by coils (19) having ends (191, 192) connected to an interconnector (22) according to one of the preceding claims.

11. Stator according to Claim 10, **characterized in that** the interconnector (22) has an outside diameter (D2) smaller than the outside diameter of the stator (11).
